# EUROPEAN PATENT APPLICATION

(11) **EP 2 345 942 A2**
(43) Date of publication of application: **20.07.2011**
(21) Application number: 10197325.3
(22) Date of filing: 29.12.2010
(51) Int. Cl.: G05B 23/02, G05B 19/418

(54) **Plant analysis system**

(30) Priority: 06.01.2010 JP 2010001204
(71) Applicant: Yokogawa Electric Corporation, Musashino-shi Tokyo 180-8750 (JP)
(72) Inventor: Susumago, Mitsutoshi, Tokyo 180-8750 (JP)
(74) Representative: Henkel, Feiler & Hänzel

(57) **Abstract**

There is provided a plant analysis system capable of enhancing efficiency of works by sharing information within a plant. A storing means (4) stores a logic defined via a reception means (13). A monitoring data creation means (24) creates KPI (key performance indicator) in real time as data for monitoring the plant based on data to be acquired from the plant by use of the logic stored in the storing means (4). An analysis data creation means (14) creates the KPI as analyzing data for analyzing a plant state in the past based on historical data stored in a historical data storage means (3) by use of the logic stored in the storing means (4).

## Description

### BACKGROUND

### Technical Field

The present invention relates to a plant analysis system for analyzing a plant state based on data acquired from the plant.

### Related Art

In a process manufacturing industry for manufacturing food products/ drinks, chemical products, medical products, petroleum, materials, and so forth, people who engage in operations of a plant comprehend states of processes based on various information collected from various locations so as to stably and safely operate the plant, thereby managing qualities, delivery dates, and so forth of the products.

Further, the people who play individual roles or tasks (e.g. a manager of a manufacturing department, an operation staff, a maintenance staff, an operator and so forth) engage in operations of the plant. The people who play individual roles collect information on their own accord using individual tools. For example, the operator of the plant monitors trends of process data, which affects workmanship of the product in accordance with a production order on the same date. The manager of the manufacturing department confirms as to whether the volume of products to be finished attains a production plan in accordance with the trends. Further, the manager of the manufacturing department checks working conditions of the people who engage in manufacturing. The operation staff checks trends in an operating condition of each process step of manufacturing. The maintenance staff checks the trends in the operating condition of a facility.

As stated above, the people who play individual roles engage in jobs by use of individual tools, and there is no relevance between the tools. Accordingly, as matters now stand, it is difficult to share operating information and operating analysis information corresponding to various roles of the people with other people who play different roles.

For example, an operator monitors tendency of trends in process data, and so forth, which affect a quality of the product in accordance with a production order. Further, the manager of the manufacturing department confirms as to whether the volume of products to be manufactured attains a production plan in accordance with the trends, and also checks working conditions of the people who engage in manufacturing. On the other hand, the operation staff checks trends in an operating condition of each process step of manufacturing, while the maintenance staff checks trends in the operating condition of the facility.

### [Related Art Literature]

[Patent Document 1] JP 2004-070969A
[Patent Document 1] JP 2547831B2

In a manufacturing field, not only a stable and safe operation but also an operation, which is efficient and has a high value, and its everlasting improvement are required owing to worldwide fiercer competition, and so forth. For this reason, not only the quality of a product but also improvement of productivity and reduction of a lead-time are emphasized as objects to be considered as a KPI (key performance indicator) in the manufacturing field. Further, accompanied by personnel downsizing in the manufacturing field, per capita workload is increased and a production system is changed, thereby increasing implementation of limited production of diversified products. As a result, there occur various new problems and it is difficult to solve the problem and fulfill quality improvement within a limited amount of time.

As for improvement in efficiency in a plant, a provider side of a control system caries out development of means for coping with improvement in efficiency. However, it is considered further development is needed because of the following reasons.

First of all, aiming to improvement of efficiency, systemization in the field of utilization of information based on "people's decision" does not move ahead. For example, process data and facility data, which are handled in operation monitoring and controllers in a distributed control system, are collected and stored in individual devices. The people who play their own roles need to collect information necessary for implementing their jobs from individual devices because information which they wish to view in response to their roles are different from each other. In order to reduce a lead-time, the people who play individual roles require multiple pieces of information but such multiple pieces of information are stored in individual devices and they must manually collect information from various devices.

Since the people who play individual roles engage in jobs by collecting information individually, it is difficult to share operating information and operating analysis, which are collected by the people with other people who play different roles. For example, it is difficult to quickly reflect an analysis result at the production improvement work and information dealing with the analysis result, which have been executed by an operation staff and a maintenance staff, on the production maintenance work such as operation monitoring, and so forth that is executed by an operator. In a direction to the contrary to this, in the case where the operator notices an occurrence of abnormality, while implementing monitoring, it is also difficult to deliver data on the abnormality and processing information on the abnormality to the operation staff and the maintenance staff of the production improvement work side.

Thus according the related-art system, there is neither collaboration nor connection between jobs of the people who play individual roles.

### SUMMARY OF THE INVENTION

Exemplary embodiments of the present invention address the above disadvantages and other disadvantages not described above. However, the present invention is not required to overcome the disadvantages described above, and thus, an exemplary embodiment of the present invention may not overcome any disadvantages.

It is one of illustrative aspects of the present invention to provide a plant analysis system capable of enhancing efficiency of works by sharing information within a plant.

According to one or more illustrative aspects of the invention, there is provided the plant analysis system of the invention for analyzing a plant state based on data acquired from the plant comprises a reception means for receiving definition of a logic for creating KPI (key performance indictor) for use in diagnosis of the plant based on data to be acquired from the plant, a storing means for storing the logic defined via the reception means, a monitoring data creation means for creating the KPI in real time as data for monitoring the plant based on the data to be acquired from the plant by use of the logic stored in the storing means, a monitoring data display means for displaying the data for monitoring the plant created by the monitoring data creation means in real time on a screen for operation monitoring, a historical data storage means for storing the data to be acquired from the plant as historical data, and an analysis data creation means for creating the KPI as analyzing data for analyzing the plant state in the past based on the historical data stored in the historical data storage means by use of the logic stored in the storing means.

### BRIEF DESCRIPTION OF THE DRAWINGS

Fig. 1 is a block diagram showing a configuration of a plant analysis system according to an embodiment of the invention:
Fig. 2 is a flow chart showing a flow of a production improvement work and a production maintenance work;
Fig. 3 is a view showing an example of configurations of a "product unit" and a "process unit";
Fig. 4 is a flow chart showing a flow of the production maintenance work and the production improvement work; and
Fig. 5(A) to Fig. 5(D) are views each showing an example of a display screen. Fig. 5(A) shows an analysis result screen. Fig. 5(B) shows a KPI operation definition screen. Fig. 5(C) shows an MT analysis definition screen. Fig. 5(D) shows a status conversion definition screen;
Fig. 6 is a view showing a correspondence relationship between a data configuration of a software sensor and screen displays;
Fig. 7 is a view showing examples of screen displays when executing a frequency separation processing of historical data; and
Fig. 8 (A) and Fig. 8(B) are views showing advantages of an MT method. Fig. 8(A) is a view showing an example for deciding a status utilizing a Mahalanobis' distance. Fig. 8(B) is a view showing examples for displaying raw data of respective tags.

### DEAILED DESCRIPTION OF EXEMPLARY EMBODIMENTS

The invention is now described with reference to an embodiment wherein a plant analysis system of the invention is applied to a distributed control system.

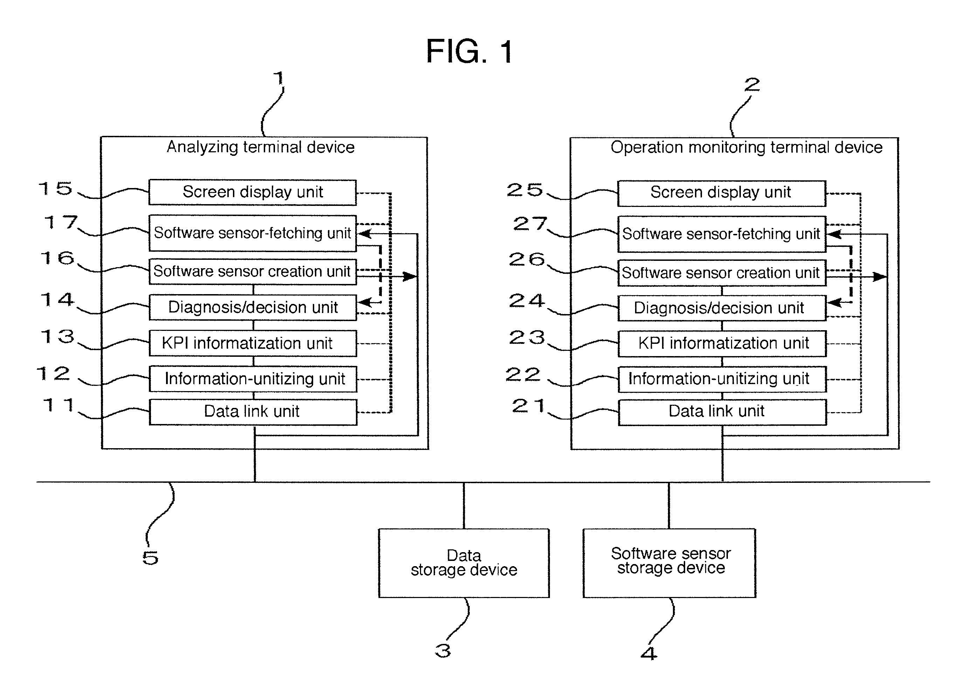

Fig. 1 is a block diagram showing a configuration of a plant analysis system according to the present embodiment.

As shown in Fig. 1, the plant analysis system according to the present embodiment comprises a terminal device 1 for analysis (hereinafter referred to as analyzing terminal device 1) for analyzing and diagnosing operation conditions of a plant in the past, a terminal device 2 for operation monitoring (hereinafter referred to as operation monitoring terminal device 2) for monitoring and controlling operation conditions of the plant in real time via field controllers dispersedly disposed in each unit of the plant, a data storage device 3 for storing therein various data, and a software sensor storage device 4 for storing a software sensor, described later.

Data to be stored in the data storage device 3 include process data and process alarm data obtained from the plant, historical data such as operation performance information and so forth indicating contents of operation by the operation monitoring terminal device 2, facility data serving as information on a plant facility, facility ledger information on the plant facility, process management information on processes carried out in the plant, job management information on jobs necessary for the plant, production management information on production in the plant, and so forth.

As shown in Fig. 1, the analyzing terminal device 1, the operation monitoring terminal device 2, the data storage device 3, and the software sensor storage device 4 are connected with each other via a communication line 5. Meanwhile, connection states of these devices and a communication system between these devices are arbitrary.

The analyzing terminal device 1 is provided with functions for analyzing and diagnosing operation conditions of the plant in the past. Described hereinafter are various functions.

### (Data link function)

A data link function is given by a data link unit 11. The data link function is a function for collecting information necessary for analysis/diagnosis from a plurality of data sources stored in the data storage device 3 and other units. The target information to be collected includes at least one of these information: the historical data, the facility data, the facility ledger information, the process management information, the job management information and the production management information stored in the data storage device 3. Further, the historical data include the process data, the process alarm data and the operation performance information. The historical data are stored in the data storage device 3 as time series data associated with time.

### (Information unitizing function)

An information unitizing function is given by an information-unitizing unit 12. The information unitizing function is a function to bundle information in an arbitrary viewpoint such as a facility or a process specified by a user, and presents the bundled information as one information group. Here, one information group bundled in a specific viewpoint is referred to as a "unit". It is possible to create a plurality of units, bundle information in various viewpoints, and present them.

### (KPI informatization function)

A KPI information function is given by a KPI informatization unit 13. The KPI informatization function is a function for defining a logic and a processing method for creating the KPI for use in diagnosis/decision of the plant based on the information group bundled as the "unit". There are followings as a conversion method for converting the information group into the KPI or a processing for conversion. The logic and so forth can be defined by arbitrarily by combining the followings.
(1) A frequency division processing utilizing "moving average of data" and "difference between raw data and moving average".
(2) A conversion processing utilizing four arithmetic operations and a logical operation.
(3) A conversion processing using a statistical processing such as an average value, the maximum value, the minimum value, and so forth.
(4) A multivariable analysis such as multiple regression analysis, and so forth.
(5) A pattern recognition processing such as Mahalanobis-Taguchi Method (MT method), and so forth.
(6) A processing for executing diagnosis based on results of operations acquired from the above items (1) to (5); for example, if the operation value is not less than 50, it is diagnosed as normality (quality is accepted) while if the operation value is less than 50, it is diagnosed as abnormality (quality is rejected), and so forth.

### (Diagnosis/decision function)

A diagnosis/decision function is given by a diagnosis/decision unit 14. The diagnosis/decision function executes a diagnosis processing by use of the logic and the processing method defined by the KPI informatization function, and also executes problem finding and cause analysis. As for the diagnosis processing, there are followings.
(1) Comparison between trends by overlay display of a plurality of trends (historical data value of the process data).
(2) Analysis of relationship between items by use of a correlation diagram.
(3) Inspection by use of various methods for quality management (a histogram, a Pareto diagram, a check sheet, a management diagram, a characteristic diagram, a stratified method, a scatter diagram, and so forth).

### (Screen display function)

A screen display function is given by a screen display unit 15. The screen display function is a function to execute a screen display of the unit defined by the information unitized function and a screen display of a diagnosis result or a decision result executed by the diagnosis/decision function. Further, the screen display function includes a function to display a logic of a software sensor and a processing method, described later.

### (Software sensor creation function)

A software sensor creation function is given by a software sensor creation unit 16. The software sensor creation function is a function for creating and registering the logic and the processing method defined by the KPI informatization function as one unity of the "software sensor". A plurality of software sensors is created like the logic and the processing method defined by the KPI informatization function. Further, it is possible to execute a screen display of the logic and the processing method of the created software sensor by the screen display function, thereby confirming the logic and the processing method. The created software sensor is stored in the software sensor storage device 4.

### (Software sensor fetching function)

A software sensor fetching function is given by a software sensor-fetching unit 17. The software sensor fetching function is a function for fetching the software sensor stored in the software sensor storage device 4. The software sensor as fetched by the software sensor fetching function is not limited to the software sensor created by the analyzing terminal device 1 but includes the software sensor created by the operation monitoring terminal device 2. It is possible to confirm the logic and the processing method of the fetched software sensor by displaying them on the screen and so forth. Further, it is possible to operate the logic and the processing method of the fetched software sensor by the diagnosis/decision function. For example, when the logic and the processing method of the software sensor are operated by the diagnosis/decision function relative to the historical data stored in the data storage device 3, a problem and so forth which occurred in the past can be reproduced in the analyzing terminal device 1.

Next, the operation monitoring terminal device 2 is a device for executing monitor/control of the operation conditions of the plant in real time.

The plant analysis system according to the present embodiment is provided with a function for monitoring and controlling the operation conditions of the plant while the operation monitoring terminal device 2 is provided with the same function as the analyzing terminal device 1. As shown in Fig. 1, the operation monitoring terminal device 2 is provided with a data link unit 21 having the data link function, an information-unitization unit 22 having the information unitization function, a KPI informatization unit 23 having the KPI informatization function, a diagnosis/decision unit 24 having the diagnosis/decision function, a screen display unit 25 having the screen display function, a software sensor creation unit 26 having the software sensor creation function and a software sensor-fetching unit 27 having the software sensor fetching function.

The software sensor as fetched by the software sensor fetching function of the operation monitoring terminal device 2 includes not only a software sensor created by the operation monitoring terminal device 2 but also a software sensor created by the analyzing terminal device 1. It is possible to confirm the logic and the processing method of the fetched software sensor by displaying them on the screen and so forth. Further, it is possible to execute an online analysis relative to data such as process data and so forth which the operation monitoring terminal device 2 acquired from the plant in real time by operating the logic and the processing method of the fetched software sensor based on the diagnosis/decision function. Still further, it is possible to reproduce problem and so forth, which occurred in the past in the operation monitoring terminal device 2 by use of the historical data stored in the data storage device 3.

Utilization forms (utilization form 1 and utilization form 2) of the plant analysis system according to the present embodiment are next described.

### (Utilization form 1)

According to the plant analysis system of the present embodiment, in the case where a diagnosis processing capable of inspecting causes of any problem and finding of the problem in a production improvement work is created, a result of the diagnosis processing can be reflected on a production maintenance activity.

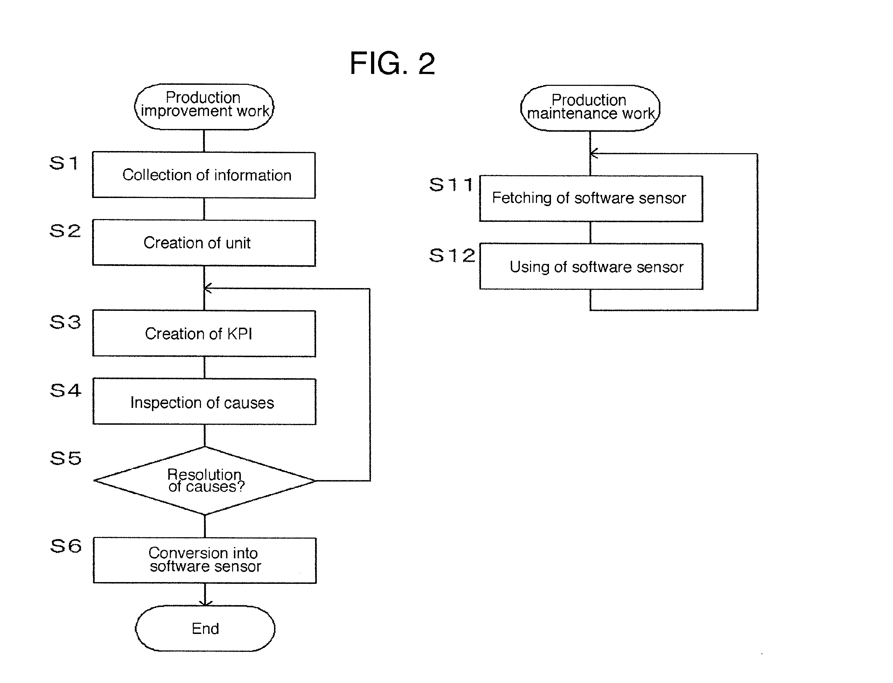

Fig. 2 is a flow chart showing a flow of the production improvement work and a flow of the production maintenance work in the utilization form 1.

Step S1 to step S6 in Fig. 2 show a flow of the production improvement work, which is executed by use of the analyzing terminal device 1.

In step S1 in Fig. 2, a person in charge of improvement work such as an operation staff, a maintenance staff, and so forth collects necessary information such as the historical data and so forth from the data storage device 3 based on the data link function of the analyzing terminal device 1 when any problem occurs. Necessary information can be collected from the historical data, the facility data, the facility ledger information, the process management information, the job management information, the production management information, and so forth based on the data link function of the analyzing terminal device 1.

Next, in step S2, the person in charge of improvement work creates a "unit" serving as a bundle of information, which the user would like to view, in conformity with the viewpoint of the user by use of the collected information. Here, cutout of necessary information is implemented from various viewpoints such as viewpoints of products, processes, facility, and so forth by use of information unitization function of the analyzing terminal device 1.

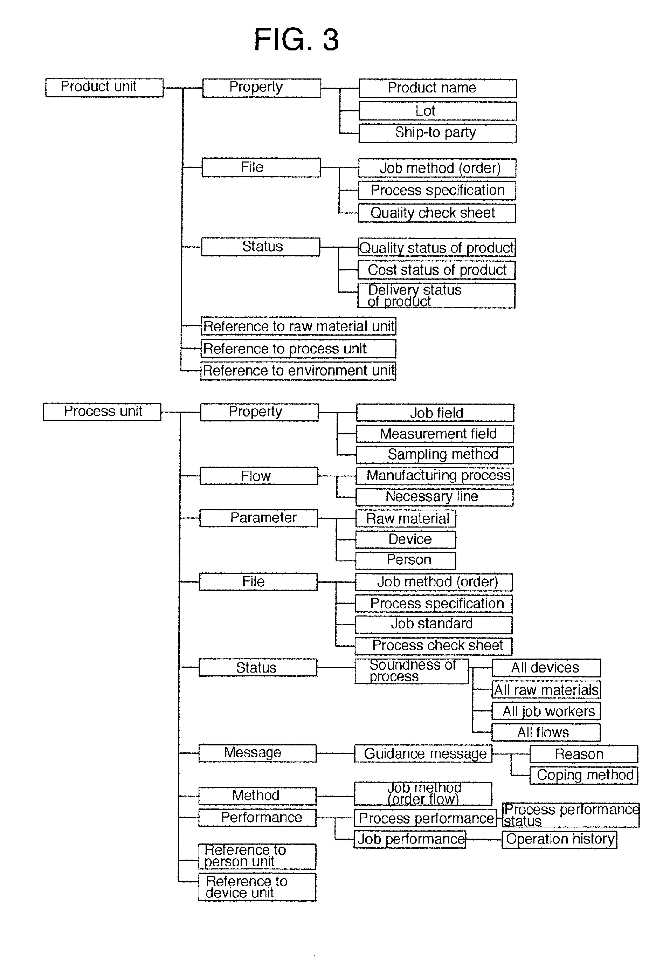

Fig. 3 is a view showing examples of configurations of a "product unit" and a "process unit".

The product unit is provided aiming at products to be produced in a plant, and it is an aggregation of information, which bundled related data in respective stages ranging from a raw material to a finished product. In the examples shown in Fig. 3, data relating to the product are classified into a "property" representing attribution of the product, a "file" representing image files relating to the product, and "status" representing status of the product, and these data are stored in the product unit. Further, a raw material unit, a process unit and an environment unit are specified as the unit to be referred to based on development from a display screen in accordance with the product unit.

The process unit is provided aiming at processes for manufacturing the product, and it is an aggregation of information, which bundled a relationship between respective processes and related data. In the examples shown in Fig. 3, data relating to the processes are classified into a "property" representing attributions of each process, and a "flow" representing data relating to a manufacturing flow, and so forth, and these data are stored in the process unit. Further, a person unit and a device unit are specified as the unit to be referred to based on development from a display screen in accordance with the process unit.

Next in step S3, the person in charge of improvement work defines the logic and the processing method for creating the KPI, from the unitized information, based on which the user executes diagnosis/decision. The KPI informatization function of the analyzing terminal device 1 is used here.

Next in step S4, the person in charge of improvement work converts the unitized information into the KPI, thereby trying to execute problem finding and inspection of causes of abnormality by the logic and the processing method which are defined in step S3 by use of the diagnosis/decision function of the analyzing terminal device 1. As a result of trial, if the problem finding and inspection of causes of abnormality are executable, a decision in step S5 is affirmative, proceeding to step S6. If the decision in step S5 is negative, the processing reverts to step S3, and study of the logic and the processing method for creating the KPI is repeated.

In step S6, the person in charge of improvement work converts the logic and the processing method defined in sep S4 into a software sensor and stores the software sensor in the software sensor storage device 4, to thereby complete the processing. The software sensor creation function of the analyzing terminal device 1 is used here.

Steps S11 to S12 in Fig. 2 show a flow of the production maintenance work, which is implemented by use of the operation monitoring terminal device 2.

In step S11 in Fig. 2, a person in charge of maintenance work acquires the software sensor stored in step S6 from the software sensor storage device 4. This processing is executed by use of the software sensor fetching function of the operation monitoring terminal device 2.

Next in step S12, the person in charge of maintenance work uses the software sensor fetched in step S11.

Here, the present plant data can be converted into the KPI in real time by the software sensor, for example, by use of the KPI informatization function of the operation monitoring terminal device 2. This enables the plant state to be digitized in real time, so that, for example, the plant state can be graphically displayed via the screen display function of the operation monitoring terminal device 2. If the logic is of a type capable of distinguishing abnormality/normality, it is possible to comprehend in real time which of the abnormality or the normality the present conditions belong to. Accordingly, the analysis result by the software sensor can be effectively utilized in monitor/control of the plant.

Further, the logic and the processing method of the software sensor themselves can be displayed on the screen of the operation monitoring terminal device 2, and also the person in charge of maintenance work can comprehend the logic and the processing method. For this reason, information on plant analysis, e.g. procedures of analysis and so forth can be broadly shared between the person in charge of improvement work and the person in charge of maintenance work via the software sensor.

### (Utilization form 2)

According to the plant analysis system of the present embodiment, if there is a problem in the monitor/control by the operation monitoring terminal device 2, the production improvement work side fetches the past data when the problem occurred in the analyzing terminal device 1 to reproduce the conditions when the problem occurred, thereby inspecting the problem.

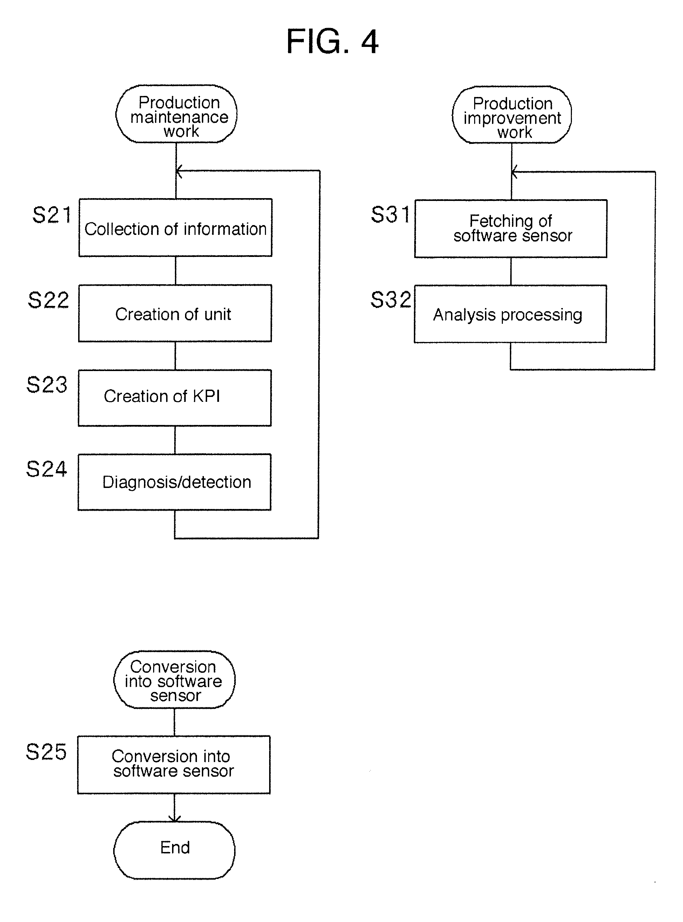

Fig. 4 is a flow chart showing a flow of the production maintenance work and a flow of the production improvement work in this utilization form.

Steps S21 to S26 in Fig. 4 show the flow of production maintenance work and the production maintenance work is implemented by use of the operation monitoring terminal device 2.

In step S21 in Fig. 4, the person in charge of maintenance work such as an operator collects information in real time from a data source of the plant so as to execute the operation monitoring. The data link function of the operation monitoring terminal device 2 is used here.

Next in step S22, the person in charge of maintenance work creates the "unit" which is the bundle of information, which the user would like to view, in conformity with the viewpoint of the user by use of the collected information. Here, cutout of necessary information is implemented from various viewpoints such as a viewpoint of products, processes, facilities, and so forth by use of information unitization function of the operation monitoring terminal device 2.

Next in step S23, the person in charge of maintenance work defines a logic and a processing method for creating KPI based on which the user executes diagnosis/decision. The KPI informatization function of the operation monitoring terminal device 2 is used here.

Next in step S24, the person in charge of maintenance work executes diagnosis/decision in real time by use of the diagnosis/decision function of the operation monitoring terminal device 2. Here, the unitized information is converted into the KPI by the logic and the processing method defined in step S23 and the person in charge of maintenance work executes diagnosis/decision based on the KPI.

As mentioned above, the person in charge of maintenance work can execute operation monitoring of the plant in real time based on the KPI by repeating the jobs in step S21 to step S24.

If there occurs any problem in the production maintenance work, the person in charge of maintenance executes the job in step S25 shown in Fig. 4, for example, upon request from the person in charge of improvement work.

In step S25, the person in charge of maintenance work converts, the logic and the processing method, which have been used for creating the KPI when the problem occurred, into a software sensor by use of the software sensor function of the operation monitoring terminal device 2 so as to enable the person in charge of improvement work to analyze the conditions when the problem occurred. The created software sensor is stored in the software sensor storage device 4.

Step S31 to step S32 show jobs to be implemented by the person in charge of improvement work by use of the software sensor created and stored in step S25. This job is implemented by use of the analyzing terminal device 1.

In step S31, the person in charge of improvement work acquires the software sensor stored in step S25 from the software sensor storage device 4. This processing is executed by use of the software sensor fetching function of the analyzing terminal device 1.

In step S32, the person in charge of improvement work can confirm a conversion processing into the KPI by the logic and the processing method as the software sensor acquired in step S31 by use of the diagnosis/decision function of the analyzing terminal device 1. Here, the conditions when the problem occurred could be reproduced by acquiring the historical data when the problem occurred from the data storage device 3, and by implementing conversion into the KPI based on the historical data. By so doing, the problem and so forth existing in the logic and the processing method can be analyzed.

Further, it is possible to newly create a logic and a processing method necessary for problem finding in concern, cause analysis and so forth by implementing the jobs in step S1 to step S6 (Fig. 2). In this case, the logic and the processing method thus created can be stored in the software sensor storage device 4 as a software sensor. The software sensor stored in the software sensor storage device 4 can be fetched in the operation monitoring terminal device 2 to be utilized in the production maintenance work as set forth above.

As mentioned above, with sharing of information via the software sensor, if there occurs a problem in the production maintenance work, the conditions when problem occurred could be reproduced at the production improvement work side to be analyzed. The production improvement work side can newly create a logic and a processing method necessary for problem finding, cause analysis and so forth, and the thus newly created logic and the processing method can be registered as a software sensor.

As mentioned above, according to the plant analysis system of the present embodiment, information on the plant analysis can be transmitted and received bilaterally between the production improvement work and the production maintenance work via the software sensor, so that a lead-time of both the works can be reduced.

It is possible to resolve the problem, for example, which has not been collaborated with each other by use of individual tools, by collaborating the problem. Further, although a job to construct the same processing individually by both the production improvement work and the production maintenance work has been needed because of non-collaboration therebetween, useless duplication of such a job can be resolved.

Further, according to the plant analysis system of the present embodiment, information on the production maintenance work and the production improvement work can be stored in the software sensor storage device 4, and these information can be used freely by both the production maintenance work and the production improvement work as shared information.

For example, know-how for use in diagnosis/decision, which are acquired respectively in the production maintenance activity and the production improvement activity, are stored as a software sensor, and they can be utilized as shared information. Further, with the storage of the know-how, for example, an operation procedure of a skilled operator can be externalized via KPI, so that the know-how can be effectively utilized as supporting information of the operation.

Further, since a viewpoint of information is freely selectable by use of the "unit", the same system can be used for various purposes of the production activity.

Generally, the people who play individual roles (e.g. a manager of a manufacturing department, an operation staff, a maintenance staff, an operator, and so forth) engage in the operation of the plant, and these people execute monitor and analysis from viewpoints of "a facility", "a process", "a quality", "people", "a raw material/energy", and so forth in response to people's roles or tasks. According to the plant analysis system of the present embodiment, since the information can be unitized in accordance with user's desired viewpoint, the plant analysis system can match various purposes (Fig. 3).

For example, in the case of viewpoint of a "process", the analyzing terminal device 1 can analyze the "process", and also information on the "process" can be monitored in real time in the operation monitoring terminal device 2.

A "process unit" can be created by registering information on the process from a plurality of data sources in the analyzing terminal device 1 or the operation monitoring terminal device 2. The person in charge of improvement work can execute analysis of the problem related to the process by use of information contained in the "process unit". For example, information on the process in the past and information on a process in which a problem occurs are compared with each other, thereby executing inspection of causes, and so forth. The logic and the processing method used in analysis of the problem are stored in the software sensor storage device 4 in the form of a software sensor.

Meanwhile, the person in charge of maintenance work can monitor not only raw data but also processed information on the process in real time by use of this software sensor.

Further, for example, in the case of viewpoint of the "facility", the analyzing terminal device 1 can analyze the "facility", and the operation monitoring terminal device 2 can monitor information on the "facility", for example, facility trend information in real time.

A "facility unit" can be created by registering information on the process from a plurality of data sources in the analyzing terminal device 1 or operation monitoring terminal device 2. The maintenance staff of the production improvement work side can execute analysis of the problem related to the facility trend information by use of information contained in the "facility unit". For example, the maintenance staff can execute inspection of causes of deterioration, and so forth by comparing long-term trends in the facility, for example, by observing the difference between a facility trend of last year and that of this year, and so forth.

Meanwhile, a maintenance staff of the production maintenance work side can monitor relatively short-term changes of conditions of the facility, and so forth by use of information contained in the "facility unit" via the operation monitoring terminal device 2. Further, the maintenance staff can confirm the state of the present facility or monitor use conditions and performance conditions of the facility.

Thus, with switchover of the viewpoints of the "facility", the "process" and so forth by use of a concept of the "unit", it is possible to efficiently access to information in response to a plurality of various purposes involved in the production activity.

Meanwhile, the plant analysis system may be configured to include individual storage devices for storing therein respective information on respective units such as the "process unit" and the "facility unit", and this system may be separated for every unit.

Further according to the plant analysis system of the present embodiment, the operation procedure of an operator can be shared.

A mechanism capable of succeeding an operation procedure or operation technique of a skilled operator is generally desired in the production field. Under present circumstances, operators comprehend operation know-how individually, and the operation know-how cannot be succeeded, for example, in the case of retirement of the operator himself or herself.

On the other hand, according to the plant analysis system of the present embodiment, a logic and a processing method based on which a skilled operator executes decision of operation conditions by use of the software sensor creation function of the operation monitoring terminal device 2 can be stored as a software sensor. If other operator uses this software sensor while fetching it in the operation monitoring terminal device 2, the other operator can implement the same operation as the skilled operator. Further, the other operator can also directly comprehend concrete operation know-how in relation to an operation content, an amount of operation, process data, and so forth with reference to the logic and the processing method stored as the software sensor. Still further, it is possible to use the plant analysis system of the invention, for example, as a navigation system for a new operator by use of the foregoing software sensor.

Further, according to the plant analysis system of the present embodiment, the operation information in the past can be effectively utilized.

There are many cases where products of the same type are produced in the production field. However, a little difference is made daily in an operation method and the amount of operation so as to maintain a constant quality owing to an influence such as changes of environment of production field accompanied by seasonal variations. Under present circumstances, the foregoing operation information has not been made into data and hence the operation information is not effectively utilized. If a trend of problem during the operation monitoring is recognized, a skilled operator frequently executes pre-processing prior to the occurrence of the problem, and the operation information in such a case has not been made into data either.

On the other hand, according to the plant analysis system of the present embodiment, a logic and a processing method for deciding an operation condition in a daily operation are stored as a software sensor, and the software sensor can be used and referred to at any time. If the present operation condition is analogous to an operation condition in the past, the software sensor can be utilized as an effective operation supporting information by using the logic and the processing method, which have been used in the operation condition in the past. Further, if the present operation condition is analogous to the operation condition in the past when the problem occurred, for example, the production improvement work side can predict the change of trend in the future by use of this software sensor. If a result of the prediction exhibits an unstable tendency, the production improvement work side deal can deal with the matter, for example, by contacting the person in charge of maintenance work, and so forth.

As mentioned above, according to the plant analysis system of the present embodiment, the Mahalanobis-Taguchi Method (MT method) can be applied to an analysis of a plant operation as a pattern recognition technology for analyzing the plant state. The MT method is an information processing technology for recognizing patterns from multi-dimensional information, thereby detecting the difference between the present status and a normal status, so that it is possible to specify where the cause is derived from if there is the difference between the present status and the normal status. As a result, it is possible to obtain information as to whether a facility/equipment normally operates or information regarding to what extent the present condition can be regarded the same as a status, which has been regarded as normal status. A technology for applying the MT method to an analysis of a plant operation is disclosed in JP 2004-070969 A and JP 2547831 B2.

In the case where the Mahalanobis-Taguchi Method (MT method) is applied as the pattern recognition technology for analyzing the plant state, an offline analysis using the MT method is executed in the production improvement work. If conditions or a logic capable of detecting abnormality and so forth are created, such conditions and the logic can be used for an online analysis as a monitoring logic in the production maintenance work. Job procedures (procedures 1 to 4) in this case are described next.

(Procedure 1) In the production improvement work, the operation staff tries to execute analysis by the MT method by use of the operation monitoring terminal device 2 based on the historical data. The operation staff executes the analysis by the MT method under various conditions based on the historical data, to find out analysis conditions capable of specifying causes of abnormality and so forth.

(Procedure 2) If analysis conditions capable of discriminating causes of abnormality and so forth are found out, the analysis conditions are stored in the software sensor storage device 4 as a software sensor. Further, in this case, the operation stuff reports the result of inspection of the cause, e.g. to the manager of a manufacturing department, and also contacts an operator who is in charge of production maintenance work to report the operator that the software sensor, which can be utilized for the analysis of abnormality as a future countermeasure, was created.

(Procedure 3) The operator fetches the software sensor out of the software sensor storage device 4 in the operation monitoring terminal device 2, if need be. Further, the operator incorporates the analysis conditions of the fetched software sensor into a monitoring processing by the operation monitoring terminal device 2, thereby setting up necessary parameters, setting up monitoring cycles, and so forth.

(Procedure 4) When the monitoring processing by the operation monitoring terminal device 2 is operated upon incorporation of the analysis conditions in the monitoring processing, the analysis contents conforming to the analysis conditions, which are created in the production improvement work, are reflected on an online analysis as they are. For this reason, the operator can monitor the abnormality on the screen of the operation monitoring terminal device 2. In this case, since the analysis result by the MT method exhibits analogy between the present conditions and abnormal status, it is possible to predict prediction of the occurrence of the abnormality in a relatively early stage, thereby dealing with the abnormality quickly and accurately.

Thus, it is possible to grasp a predictive stage where a plurality of data get an imbalance therebetween by use of the MT method, and hence, for example, here is a possibility of detection of the abnormality several hours before the occurrence of abnormality, not immediately before the occurrence of abnormality. The earlier the detection time is, the more enough time the operator can take to cope with the matter, thereby preventing the abnormality in advance. With the application of the MT method, not only a lead-time involved in the analysis is reduced but also quality maintenance and productivity improvement can be enhanced.

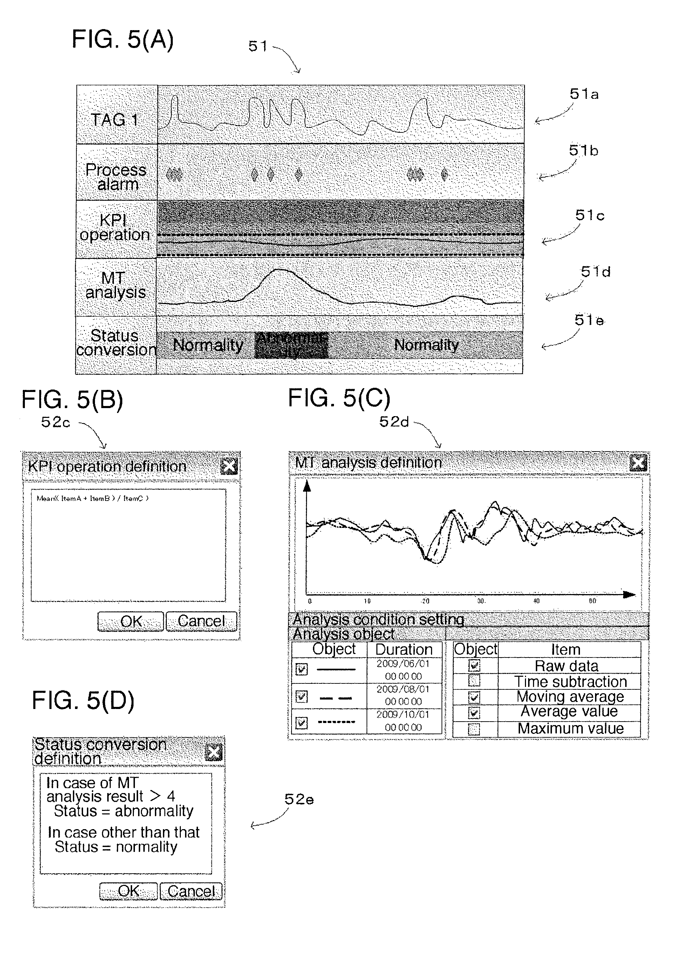

Contents of the logic and the software sensor and so forth which are used in the analysis of the plant analysis system of the present embodiment are next described with reference to Fig. 5 to Fig. 8 in accordance with a screen display and so forth of the analyzing terminal device 1 and that of the operation monitoring terminal device 2. These screen displays are based on the screen display function of the analyzing terminal device 1 and that of the operation monitoring terminal device 2.

Fig. 5(A) exemplifies analysis result display screens in which the analysis results are displayed on the screen of the analyzing terminal device 1 or that of the screen of the operation monitoring terminal device 2.

In the example shown in Fig. 5(A), areas 51a to 51e are provided on an analysis result display screen 51. There are respectively displayed a history of a predetermined process data (TAG 1) value on the area 51a, a history of the occurrence of a predetermined process alarm on the area 51b, a history of a KPI defined by use of an arithmetic expression on the area 51c, an analysis result by the MT method in accordance with a prescribed definitions on the area 51d, and a history of status in accordance with a predetermined definitions on the area 51e. The displays on the areas 51a and 51e indicate respective histories, analysis results, and so forth by a graphic display wherein a horizontal axis represents a common time. The analysis result by the MT method to be displayed on the area 51d and the status displayed on the area 51e respectively correspond to the KPI or histories thereof.

The history of the process data value displayed on the area 51a and the history of the occurrence of process alarm displayed on the area 51b are acquired respectively from the data storage device 3 and so forth by the data link function of the analyzing terminal device 1 or that of the operation monitoring terminal device 2.

Fig. 5(B) shows a KPI arithmetic definition screen 52c for defining the arithmetic expression of the KPI displayed on the area 51c. A user can define the arithmetic expression of the KPI by the KPI arithmetic definition screen 52c via the analyzing terminal device 1 and the operation monitoring terminal device 2. Further, this definition content constitutes a part of information of the software sensor, and is stored in the software sensor storage device 4.

Fig. 5(C) shows an MT analysis definition screen 52d for defining an analysis method by the MT method to be displayed on the area 51d. The user can define the analysis method by the MT method by the MT analysis definition screen 52d via the analyzing terminal device 1 and the operation monitoring terminal device 2. Further, this definition content constitutes a part of information of the software sensor, and is stored in the software sensor storage device 4.

Fig. 5(D) shows a status conversion definition screen 52e for defining the status content displayed on the area 51e. The user can define the status content by the status conversion definition screen 52e via the analyzing terminal device 1 and the operation monitoring terminal device 2. In the example shown in Fig. 5(D), the analysis result by the MT method which has been analyzed in accordance with the definition by the MT analysis definition screen 52d (Fig. 5(C)) is defined to reflect on a status (normality /abnormality). This definition content constitutes a part of information of the software sensor, and is stored in the software sensor storage device 4.

The definition contents defined by use of the definition screens shown in Fig. 5(B) to Fig. 5(D) are registered (stored in the software sensor storage device 4) as a software sensor. A screen in the form corresponding to Fig. 5(A) showing the use of the definition contents is caused to display in the terminal device 1 and analysis and the operation monitoring terminal device 2 by fetching the registered software sensor, which can be used for the plant analysis. With the fetching of the registered software sensor, screens displaying the definition contents per self on the screen of the terminal device 1 and that of the analysis and operation monitoring terminal device 2, namely, the definition screens shown in Fig. 5(B) to Fig. 5(D) or screens displaying the contents equivalent to the definition screens can be displayed. By so doing, the logic and so forth for analysis, which have been registered as the software sensor, can be freely referred to.

In the example shown in Fig. 5(A), the analysis result by the MT method is used for decision of the status (normality/abnormality). At the time when such analysis logic and the processing method are recognized as effective, the analysis logic and so forth can be registered as a software sensor via the analyzing terminal device 1 or the operation monitoring terminal device 2. In the case where the analysis logic and the processing method are recognized as effective, they are not always limited to the production improvement work or the production maintenance work, while in the case where the software sensor once registered is utilized, it is not limited to the production improvement work or the production maintenance work. It is possible to utilize the software sensor registered at the production improvement work side by the production maintenance work, and vice versa. It is possible to achieve sharing information on the plant analysis by enabling the software sensor to be bilaterally registered and utilized between the production maintenance work and the production improvement work.

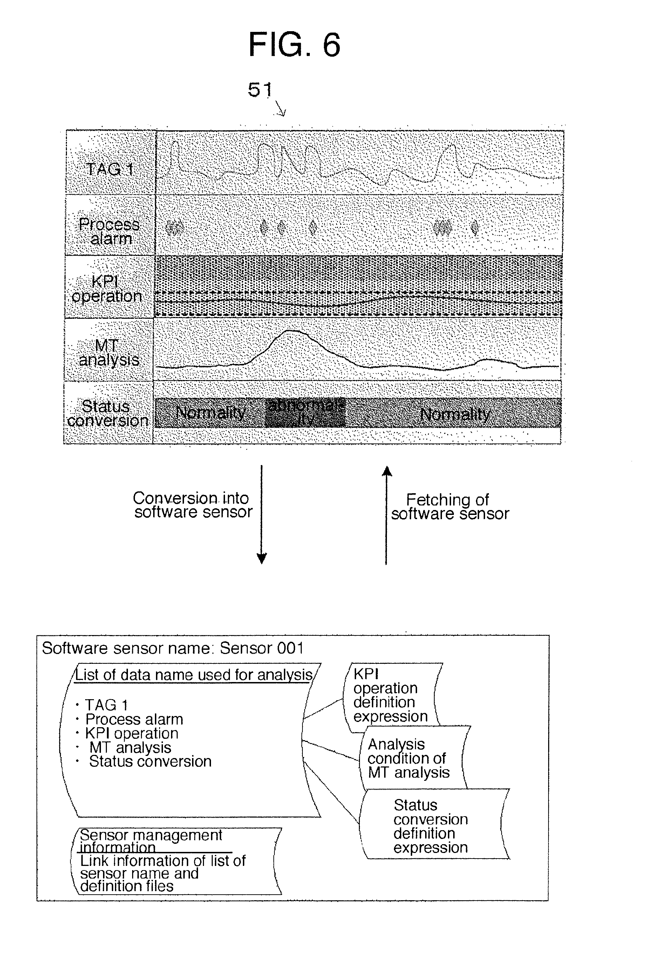

Fig. 6 is a view showing a correspondence relationship between data configurations of the software sensor and screen displays.

As shown in Fig. 6, the software sensor is comprised of a list of names of data to be used for analysis, definitions of KPI contained in these data, and sensor management information serving as link information of the data and definition files. The example shown in Fig. 6 shows a case corresponding to the analysis result display screen 51, wherein the list of names of data corresponds to data displayed on the area 51a to 51e, and the definitions of KPI correspond to definition contents on the definition screens shown in Fig. 5(B) to Fig. 5(D). It is possible to directly comprehend the analysis logic and processing method by displaying the contents of the foregoing software sensor (a list of names of data and definitions of KPI) on the screen of the analyzing terminal device 1 or that of the operation monitoring terminal device 2.

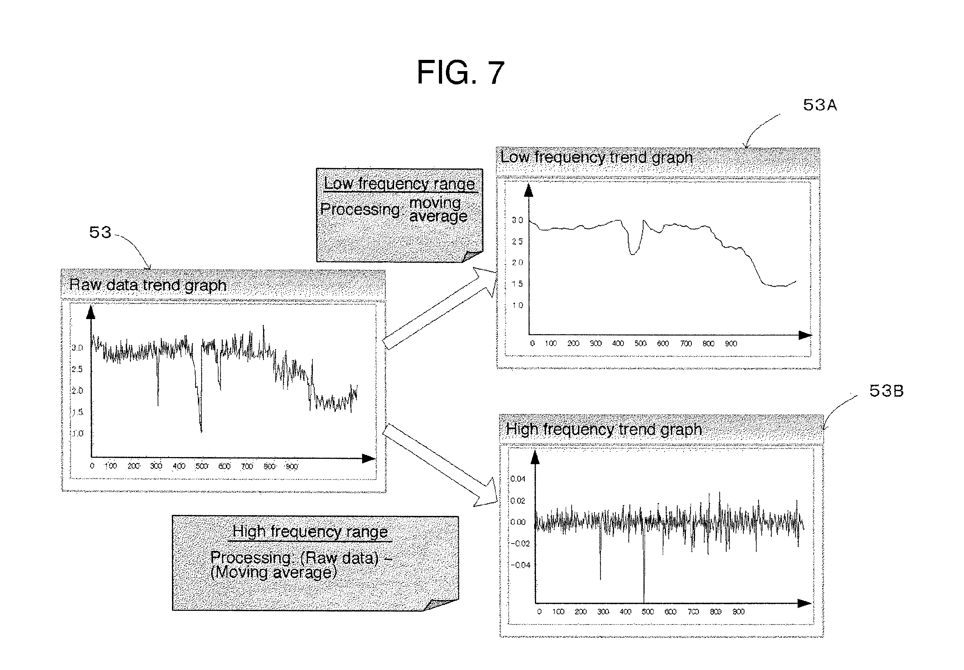

Fig. 7 shows examples of screen displays when executing a frequency separation processing of historical data by use of "moving average of data". As mentioned above, the frequency separation processing is one of techniques for defining a logic and so forth.

In the example shown in Fig. 7, raw data are shown as a trend graph screen 53, and a moving average of this data (low frequency range) is shown as a trend graph screen 53A. Further, the difference between the raw data and the moving average (high frequency range) is shown as a trend graph screen 53B. It is possible to define the KPI by use of data obtained by the foregoing processing. It is possible to prevent an erroneous detection of the occurrence of abnormality caused by a transient behavior by defining a status, for example, by use of the data in the low frequency range. The frequency separation processing can be applied not only to the raw data such as the historical data but also to KPI in the form of a function of time.

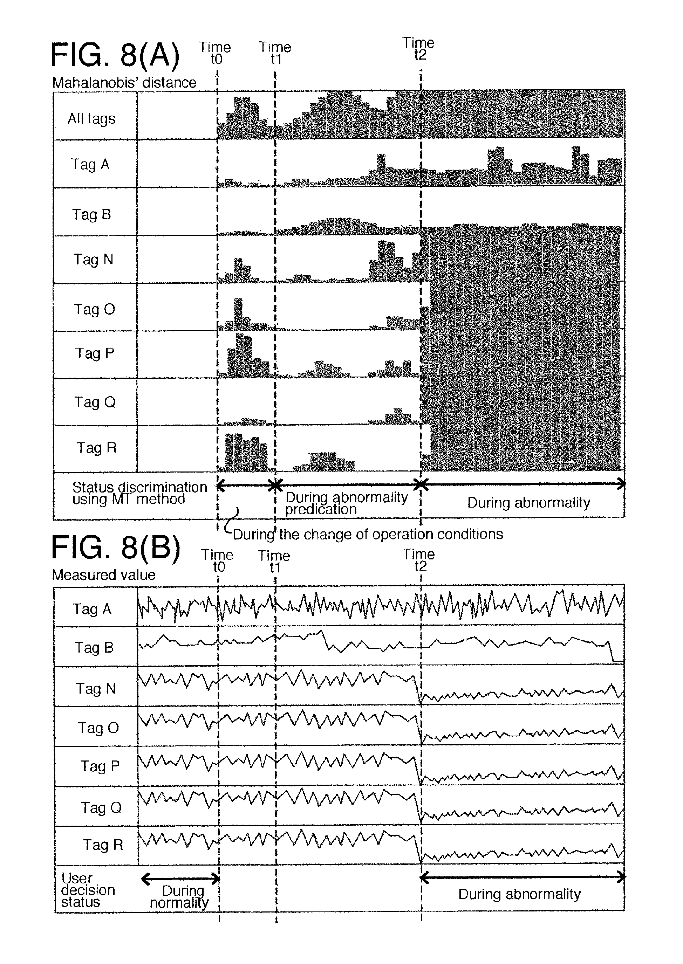

Fig. 8 (A) and Fig. 8(B) are views showing advantages of the MT method, which is cited as one of logics for creating the KPI according to the present embodiment. Fig. 8(A) shows examples for deciding status by utilizing a Mahalanobis' distance of respective tags (process data). The Mahalanobis' distance indicates a distance between a data group as objects of analysis and a historical data group to be decided as normality, wherein the larger the Mahalanobis' distance is, the more the tag status is remote from patterns at the time of normality. In the example shown in Fig. 8(A), the Mahalanobis' distance of respective tags (Tag A, Tag B, Tag N, ... in Fig. 8(A)) and the sum of the Mahalanobis' distances ("all the tags" in Fig. 8(A)) are defined as the KPI, wherein the status are decided based on the sum of these Mahalanobis' distances. Meanwhile, Fig. 8(B) shows the examples for displaying raw data of respective tags on the same time zones as those in Fig. 8(A).

As shown in Fig. 8(A), since the Mahalanobis' distance increases as the plant state approaches an abnormal status, it is possible to detect the occurrence of abnormality by monitoring the Mahalanobis' distance. In the examples shown in Fig. 8(A), it is decided that the abnormality occurred at time t2. Further, as shown in Fig. 8(A), when the operation conditions are switched over at time to, the Mahalanobis' distance is decreased as a whole until the normal status is obtained after time t0. However, the Mahalanobis' distance is turned into a trend to increase at time t1, it is possible to recognize a precursor of abnormality by grasping this trend. Accordingly, it is possible to predict the occurrence of abnormality earlier than time t2 when the status indicates the abnormality.

On the other hand, as shown in Fig. 8(B), even if only the raw data of respective tags are displayed on the screen as made in the related-art system, it is difficult for the operator to grasp the precursor of abnormality.

As mentioned above, with the application of the MT method, the operator can predict the occurrence of abnormality in a relatively early stage by displaying the screen of the operation monitoring terminal device 2, as shown in Fig. 8(A), so that the operator can deal with the matter rapidly and accurately in order to evade the occurrence of abnormality.

As mentioned above, according to the plant analysis system of the present embodiment, it is possible to provide a tool, which can be used in common by both the production improvement work and the production maintenance work, thereby sharing information therebetween. Further, it is possible to rapidly reflect the problem found at the production improvement work and the solution of the problem on the plant operation. Still Further, it is possible to confirm and analyze the problem of the processing in the plant operation at the production improvement work side.

Still further, according to the plant analysis system of the present embodiment, the information can be shared between the production maintenance work and the production improvement work via the software sensor, so that both the works can be collaborated with each other. Accordingly, a work cycle can be expedited, thereby reducing a production lead-time. Further, it is possible to resolve the problem and improve the quality of product within limited time.

More still further, according to the plant analysis system of the invention, since the logic for creating the KPI is stored, the KPI is created in real time as data for monitoring the plant based on the data to be acquired from the plant by use of the stored logic, the KPI is created as analyzing data for analyzing the plant state in the past based on the historical data by use of the stored logic, and the KPI is created as analyzing data for analyzing the plant state in the past based on the historical data by use of the stored logic, the information within the plant can be shared via the KPI, thereby enhancing the efficiency of works.

While the present invention has been shown and described with reference to certain exemplary embodiments thereof, other implementations are within the scope of the claims. It will be understood by those skilled in the art that various changes in form and details may be made therein without departing from the spirit and scope of the invention as defined by the appended claims.

## Claims

1. A plant analysis system for analyzing a plant state based on data acquired from the plant comprising:
a reception means (13) for receiving definition of a logic for creating KPI (key performance indicator) for use in diagnosis of the plant based on data to be acquired from the plant;
a storing means (4) for storing the logic defined via the reception means;
a monitoring data creation means (24) for creating the KPI in real time as data for monitoring the plant based on the data to be acquired from the plant by use of the logic stored in the storing means;
a monitoring data display means (25) for displaying the data for monitoring the plant created by the monitoring data creation means (24) in real time on a screen for operation monitoring;
a historical data storage means (3) for storing the data to be acquired from the plant as historical data; and
an analysis data creation means (14) for creating the KPI as analyzing data for analyzing the plant state in the past based on the historical data stored in the historical data storage means (3) by use of the logic stored in the storing means.

2. The plant analysis system according to claim 1, further comprising a logic display means for displaying contents of the logic stored in the storing means (4) on the screen for operation monitoring.

3. The plant analysis system according to claim 1 or 2, wherein the logic uses a pattern recognition processing of a Mahalanobis-Taguchi Method.

4. The plant analysis system according to any one of claims 1 to 3, wherein the logic includes a frequency division processing.

5. The plant analysis system according to any one of claims 1 to 4, wherein the reception means (13) receives definition of the logic via the screen for operation monitoring.

6. The plant analysis system according to any one of claims 1 to 5, further comprising an information acquisition means (12) for acquiring an information group necessary for defining the logic as an information group put together for every viewpoints of a user when defining the logic via the reception means (13).
